# EUROPÄISCHE PATENTANMELDUNG

(11) **EP 4 231 076 A1**
(43) Veröffentlichungstag der Anmeldung: **23.08.2023**
(21) Anmeldenummer: 23158054.9
(22) Anmeldetag: 22.02.2023
(51) Int. Cl.: G02B 6/44, H02G 3/04, H02G 15/013, H02G 15/04

(54) **EINZELROHRABDICHTUNG MIT KLEMMEINRICHTUNG**

(30) Priorität: 22.02.2022 DE 102022104173
(71) Anmelder: gabo Systemtechnik GmbH, 94559 Niederwinkling (DE)
(72) Erfinder: Karl, Markus, 94327 Bogen (DE); Geiger, Alexander, 94559 Niederwinkling (DE)
(74) Vertreter: Schmid, Nils T.F.

(57) **Zusammenfassung**

Die vorliegende Erfindung betrifft eine Einzelrohrabdichtung (1) zum Montieren an einem Endabschnitt (5) eines starren Kunststoffrohrs (3), wie eines Mikrorohrs, das einen Innenkanal zum Aufnehmen von wenigstens einem Datenkabel (7), wie einem Glasfaserkabel, aufweist, umfassend:
eine hohle Stülphülse (9) aus Kunststoff, die eine Einstecköffnung (19) zum axialen Einführen des Endabschnitts, einen der Einstecköffnung diametral gegenüberliegenden Anschlag (21), der ein axiales Verschieben des eingesteckten Endabschnitts begrenzt, und eine Austrittsöffnung (29) aufweist, durch die hindurch sich das Datenkabel aus der Stülphülse axial erstrecken kann, wobei die Stülphülse mit einem Längsschlitz (27) versehen ist, längs dem das Datenkabel radial in die Stülphülse einsetzbar ist; und
einen in die Stülphülse eingesetzten, elastisch verformbaren Dichtungskörper (11), der einen dem Innenkanal zugewandten Stirnabschnitt (41) aufweist, der zum Abdichten des Innenkanals geformt ist, wobei zum Aufbau der Abdichtung der Dichtungskörper zwischen dem Anschlag und dem Endabschnitt axial verpresst ist;
**gekennzeichnet** durch eine Klemmeinrichtung (13), die zum Begrenzen, insbesondere Verhindern, eines radialen Aufweitens der Stülphülse und/oder des Dichtungskörpers infolge dessen axialer Verpressung zwischen dem Anschlag und dem Endabschnitt ausgebildet ist.

## Beschreibung

Die Erfindung betrifft eine Einzelrohrabdichtung oder Einzelzugabdichtung zum Montieren an einem Endabschnitt eines starren Kunststoffrohrs, wie eines Mikrorohrs. Ein Mikrorohr ist ein starres Kunststoffrohr, das einen zylindrischen Außendurchmesser von 3 mm bis 80 mm, vorzugsweise von 3 mm bis 25 mm, und eine Wandstärke von wenigstens 0,5 mm aufweisen kann. Das Kunststoffrohr hat einen Innenkanal zum Aufnehmen von wenigstens einem Datenkabel, wie einem Glasfaserkabel. Eine derartige Einzelrohrabdichtung ist in DE 10 2011 103 367 A1 offenbart. Die Offenbarung in DE 10 2011 103 367 A1 soll mit Bezug hier aufgenommen sein, was die Details zu dem Kunststoffrohr, wie dem Mikrorohr, betrifft.

Die bekannte Einzelrohrabdichtung wird an einem Endabschnitt des starren Kunststoffrohres aufgesteckt, wobei ein zylindrischer Dichtungskörper von zwei Halbschalen umgeben wird. Der Dichtungskörper nimmt in seinem Innenraum den Endabschnitt des Kunststoffrohres auf und hat einen Fortsatz, der zum Freigeben einer Austrittsöffnung abtrennbar ist. Um radiale Dichtungskräfte zwischen dem Endabschnitt des Kunststoffrohrs und der Innenseite des Dichtungskörpers aufzubauen, sind zwei Halbschalen, die formkomplementär ineinander greifen, vorgesehen, welche durch ein axiales Aufschieben einer sogenannten Schwalbenschwanzklemme radial aufeinander zu gedrängt werden, um den Dichtungskörper in Radialrichtung zu quetschen. Bei dieser bewährten Einzelrohrabdichtung ist bei der Herstellung eine relativ hohe Fertigungsgenauigkeit in der Radialabmessung bereitzustellen, damit eine zuverlässige Dichtung mittels der elastischen Verformung des Dichtungskörpers erreicht wird. Zudem ist die Teileanzahl aufgrund der Schwalbenschwanzklemme und der Halbschalen relativ hoch.

Zur Lösung dieser Problemstellung hat die Anmelderin die gemäß der deutschen Patentanmeldung DE 10 2020 111 985 A1 ausgebildete Einzelzugabdichtung entwickelt, die eine hohlzylindrische Stülphülse aus Kunststoff mit einer Einstecköffnung und einem der Einstecköffnung gegenüberliegenden Anschlag offenbart, um ein Verschieben des Endabschnitts über den Anschlag hinaus in der Stülphülse zu vermeiden. Die Einzelzugabdichtung gemäß DE 10 2020 111 985 A1 weist ferner einen in die Stülphülse einzusetzenden Dichtungskörper auf, der einen konischen Dichtungsabschnitt zum Abdichten des Innenkanals des Kunststoffrohres aufweist und im montierten Zustand zwischen dem Anschlag und dem Kunststoffrohr axial verpresst ist.

Die Einzelzugabdichtung gemäß DE 10 2020 111 985 A1 erfreut sich grundsätzlich großer Beliebtheit. Es hat sich allerdings herausgestellt, dass insbesondere für größer dimensionierte Einzelzugabdichtungen, insbesondere ab einem Durchmesser des Kunststoffrohrs von etwa 12 mm, insbesondere aufgrund der Schlitzung der Stülphülse beim Einstecken des Kunststoffrohrs in die Stülphülse die durch den Schlitz getrennten Mantelabschnitte auseinandergedrückt werden, sodass der Dichtungskörper insbesondere im Bereich des umlaufenden Dichtkontakts des abzudichtenden Glasfaserkabels nach außen ausweichen kann und/oder die Mantelabschnitte der Stülphülse auseinander gedrückt werden, sodass die Dichtigkeit nicht ausreichend gewährleistet ist. Das Abheben des Dichtungskörpers vom Glasfaserkabel und/oder das Aufspreizen der Mantelabschnitte führt zu einer unerwünschten sichelartigen Leckage-Öffnung.

Eine Aufgabe der vorliegenden Erfindung besteht darin, die Nachteile aus dem Stand der Technik zu überwinden, insbesondere eine Einzelrohrabdichtung mit verbesserter Dichtigkeit insbesondere auch bei größeren Rohrdurchmessern sicherzustellen.

Die Aufgabe wird durch den Gegenstand der unabhängigen Ansprüche gelöst.

Danach ist eine Einzelrohrabdichtung oder eine Einzelzugabdichtung zum Montieren an einem Endabschnitt eines starren Kunststoffrohrs, wie eines Mikrorohrs, bereitgestellt. Das Kunststoffrohr weist einen Innenkanal zum Aufnehmen von wenigstens einem Datenkabel, wie einem Glasfaserkabel, auf. Das Kunststoffrohr umfasst außerdem eine starre Rohrstruktur, um das Datenkabel vor äußeren Schlägen zu schützen. Dabei kann die Wandstärke des Kunststoffrohrs wenigstens 0,5 mm bei einem Außendurchmesser des Kunststoffrohrs von weniger als 10 mm oder 20 mm sein. Um eine ausreichende Starrheit bereitzustellen, kann das Kunststoffrohr wenigstens eine Wandstärke von 1 mm, 1,5 mm oder 2 mm bei einem Außendurchmesser von mehr als 20 mm aufweisen.

Eine erfindungsgemäße Einzelrohrabdichtung umfasst eine hohle Stülphülse aus Kunststoff. Die Stülphülse kann zumindest teilweise hohlzylindrisch ausgebildet sein. Die Teilzylindrigkeit kann insbesondere dadurch realisiert sein, dass eine Hülsenstruktur als solche stets zylindrisch ist, allerdings Aussparungen, wie Schlitze und ggf. Einsetzfenster, ein vollständiges Umlaufen der Hülsenstruktur verhindert. Die Stülphülse ist aus Kunststoff hergestellt, um einerseits eine Biegeflexibilität zu haben, die es erleichtert die Stülphülse auf das Kunststoffrohr aufzustecken, und andererseits sicherzustellen, dass das Kunststoffrohr und somit der Innenkanal des Kunststoffrohrs zur Aufnahme des Datenkabels im Wesentlichen stets seine zylindrische Innenform behalten, um das Datenkabel gegen Außeneinflüsse zu schützen. Es sei klar, dass der zylindrische Innenkanal durchaus im Rahmen der elastischen Verbiegung im Querschnitt geändert sein kann, allerdings soll aufgrund der Elastizität die zylindrische Grundform nicht veränderbar sein. Die Stülphülse umfasst einen Innenraum, in den der Endabschnitt einsteckbar ist. Zur Montage der Einzelrohrabdichtung wird die Stülphülse von dem Endabschnitt getrennt hergestellt und vor Ort bereitgestellt, um auf den Endabschnitt des Kunststoffrohrs aufgesteckt zu werden. Es sei klar, dass auch eine montierte Einzelrohrabdichtung von dem Gegenstand der Erfindung umfasst sein soll. Der Innenraum der Stülphülse ist bezüglich der Außenabmessung des Endabschnitts des Kunststoffrohrs formangepasst. Vorzugsweise ist der Innenraum zylindrisch, so dass er den zylindrischen Endabschnitt aufnehmen kann. Es kann vorgesehen sein, dass sich die Stülphülse beim Aufstecken auf das Kunststoffrohr bzw. beim Einschieben des Endabschnitts in die Stülphülse aufweitet, um den Endabschnitt formschlüssig aufzunehmen.

Die Stülphülse kann entlang einer Längsachse bzw. Mittelachse zumindest teilweise rotationssymmetrisch ausgebildet sein. Die Längsachse der Stülphülse definiert eine Axialrichtung der Stülphülse und eine Axialrichtung der gesamten Einzelrohrabdichtung. Eine Radialrichtung der Einzelrohrabdichtung im Sinne der vorliegenden Erfindung erstreckt sich entsprechend von der Längsachse der Stülphülse senkrecht zur Axialrichtung in Richtung einer Außenseite der Stülphülse.

Die Stülphülse weist eine Einstecköffnung zum axialen Einführen des Endabschnitts in den Innenraum auf. Im montierten Zustand ist der Innenraum von dem Endabschnitt vorzugsweise vollständig belegt. Die Stülphülse weist außerdem einen der Einstecköffnung diametral gegenüberliegenden Anschlag auf, der ein axiales Verschieben des in den Innenraum eingesteckten Endabschnitts begrenzt. Der Anschlag soll verhindern, dass das im unmontierten Zustand freie Ende des Endabschnitts über den Anschlag hinaus in die Stülphülse eingeschoben werden kann. Auf diese Weise ist eine axiale Position der Einzelrohrabdichtung auf dem Kunststoffrohr festgelegt. Der Anschlag kann beispielsweise als Radialanschlag, insbesondere als Radialwand, ausgebildet sein und sich somit radial von der Innenseite der Stülphülse ins Innere der Stülphülse erstrecken. Der Anschlag weist eine Austrittsöffnung auf, durch die hindurch sich das Datenkabel, das sich im Innenkanal des Kunststoffrohres befindet, aus der Stülphülse axial erstrecken kann. Die Austrittsöffnung kann mittig angeordnet sein und eine Abmessung aufweisen, die gerade etwas größer als die Abmessung des isolierten oder unisolierten Datenkabels ist. Die Stülphülse ist mit einem Längsschlitz versehen, längs dem das Datenkabel radial in die Stülphülse einsetzbar ist. Der Längsschlitz teilt die Stülphülse bzw. einen die Stülphülse bildenden Hülsenmantel in gegenüberliegende Mantelabschnitte. Es kann vorgesehen sein, dass das Datenkabel radial eingesetzt wird, bevor der Endabschnitt in axialer Richtung in die Stülphülse und über das Datenkabel geschoben wird. Der Längsschlitz erstreckt sich vorzugsweise vollständig entlang der gesamten Axialerstreckung der Stülphülse und kann bezüglich des Anschlags derart geformt sein, dass der Längsschlitz in die Austrittsöffnung mündet. Durch den Längsschlitz ist das Datenkabel derart verlegbar, dass es koaxial zur Längsachse der Stülphülse an der Einstecköffnung, im Verlauf der gesamten Axialerstreckung der Stülphülse und an der Austrittsöffnung liegen kann, insbesondere ohne von dem Verlauf der Längsachse der Stülphülse abweichen zu müssen.

Die erfindungsgemäße Einzelrohrabdichtung umfasst außerdem einen in die Stülphülse eingesetzten, elastisch verformbaren Dichtungskörper. Der Dichtungskörper kann aus einem Elastomermaterial, beispielsweise Gummi, gebildet sein. Der Dichtungskörper kann außenseitig im Wesentlichen zylindrisch geformt sein und kann an die Abmessung des Innenraums der Stülphülse angepasst sein. Der Dichtungskörper weist einen dem Innenkanal des Kunststoffrohrs zugewandten Stirnabschnitt auf, der zum Abdichten des Innenkanals geformt ist. Der Stirnabschnitt kann beispielsweise kegelstumpfförmig oder kegelförmig geformt sein. Zum Aufbau der Abdichtung ist der Dichtungskörper zwischen dem Anschlag und dem Endabschnitt axial verpresst. Durch die axiale Verpressung kann insbesondere ein umlaufender Abdichtungskontakt zwischen dem Stirnabschnitt und dem Innenkanal des Kunststoffrohrs und/oder dem Ende des Kunststoffrohres ausgebildet sein. Der Dichtungskörper kann gleichzeitig einen umlaufenden Dichtkontakt mit dem Datenkabel ausbilden, um gleichzeitig eine Abdichtung des Datenkabels zu ermöglichen.

Erfindungsgemäß umfasst die Einzelrohrabdichtung außerdem eine Klemmeinrichtung, die zum Begrenzen, insbesondere Verhindern, eines radialen Aufweitens der Stülphülse und/oder des Dichtungskörpers infolge dessen axialer Verpressung zwischen dem Anschlag und dem Endabschnitt ausgebildet ist. Ein radiales Aufweiten des Dichtungskörpers entsteht beim Aufstecken der Stülphülse auf den Endabschnitt bzw. beim Einschieben des Endabschnitts in die Stülphülse dadurch, dass der Dichtungskörper in Axialrichtung zwischen dem Endabschnitt und dem Anschlag komprimiert wird und sich durch ein Ausweichen des Materials des Dichtungskörpers entsprechend in radialer Richtung ausdehnt bzw. aufweitet. Durch das radiale Aufweiten des Dichtungskörpers kann sich auch die Stülphülse, insbesondere in dem Bereich, in dem der Dichtungskörper an der Innenseite der Stülphülse anliegt, radial aufweiten. Insbesondere können sich die von dem Längsschlitz getrennten Mantelabschnitte der Stülphülse aufbiegen bzw. aufspreizen. Mit anderen Worten können sich die Mantelabschnitte in Umfangsrichtung der Stülphülse voneinander weg bewegen, was zu einem radialen Aufweiten der Stülphülse und einer geringeren Verpressung des Dichtungskörpers innerhalb der Stülphülse führen kann. Wenn der Dichtungskörper radial nach außen ausweicht, kann das außerdem dazu führen, dass der Dichtungskörper nicht mehr umlaufend an der Innenseite des Kunststoffrohrs und/oder an der Außenseite des Datenkabels anliegt und die Einzelrohrabdichtung nicht mehr zuverlässig abdichtet. Die erfindungsgemäße Klemmeinrichtung verstärkt die Stülphülse, so dass diese sich nicht mehr oder zumindest weniger stark radial aufweiten kann. Dadurch kann sich auch der Dichtungskörper im Inneren der Stülphülse nicht mehr oder zumindest weniger stark radial ausweiten und hebt nicht von der Außenseite des Datenkabels ab. Insbesondere kann die Klemmeinrichtung die durch den Längsschlitz getrennten Mantelabschnitte verklemmen, so dass diese sich in Umfangsrichtung nicht mehr auseinander bewegen können. Auf diese Weise kann sichergestellt werden, dass der Dichtungskörper zuverlässig einen umlaufenden Dichtungskontakt mit der Innenseite des Kunststoffrohrs und mit der Außenseite des Datenkabels ausbildet. Die erfindungsgemäße Einzelrohrabdichtung, insbesondere die erfindungsgemäße Klemmeinrichtung, ermöglicht somit eine zuverlässigere Abdichtung des Kunststoffrohrs und/oder des Datenkabels mit einer höheren Dichtigkeit, insbesondere auch bei Rohrdurchmessern über 12 mm.

Gemäß einer beispielhaften Ausführung ist die Klemmeinrichtung separat zur Stülphülse hergestellt. Alternativ oder zusätzlich ist die Klemmeinrichtung radial auf die Stülphülse aufsteckbar. Auf diese Weise können die Klemmeinrichtung und die Stülphülse unabhängig voneinander kostengünstig hergestellt, gelagert und/oder transportiert werden. Bei Bedarf kann die Klemmeinrichtung schnell und zuverlässig auf die Stülphülse montiert werden. Die Klemmeinrichtung kann beispielsweise auf die Stülphülse aufgesteckt werden, nachdem die Stülphülse auf das Kunststoffrohr aufgesteckt bzw. der Endabschnitt in die Stülphülse eingeschoben wurde. Insbesondere kann die Klemmeinrichtung auf diese Weise manuell, ohne Werkzeug, auf die Stülphülse aufgesteckt werden, was die Montage der Klemmeinrichtung besonders einfach macht.

Gemäß einer weiteren beispielhaften Ausführung ist die Klemmeinrichtung wenigstens teilweise rotationsförmig ausgebildet. Vorzugsweise ist die Klemmeinrichtung als Klemmring oder Klemmhülse ausgebildet. Alternativ oder zusätzlich ist eine vorzugsweise rotationsförmige Innenkontur der Klemmeinrichtung wenigstens abschnittsweise an eine Außenkontur der Stülphülse formangepasst. Auf diese Weise kann ein radiales Aufweiten der Stülphülse und/oder des Dichtungskörpers durch ein flächiges Anliegen der Klemmeinrichtung an der Stülphülse besonders gut und besonders zuverlässig begrenzt bzw. verhindert werden.

In einer weiteren beispielhaften Ausführung ist die Klemmeinrichtung in Umfangsrichtung geschlitzt. Mit anderen Worten ist die Klemmeinrichtung in Umfangsrichtung an einer Seite offen, so dass die Klemmeinrichtung über die offene Seite bzw. den Schlitz auf die Stülphülse aufgesteckt werden kann. In einer beispielhaften Weiterbildung beträgt ein Öffnungswinkel der Klemmeinrichtung zwischen 90° und 180°. Alternativ oder zusätzlich umgreift die Klemmeinrichtung die Stülphülse zu wenigstens 50% insbesondere zu wenigstens 60%.

In einer weiteren beispielhaften Ausführung weist die Klemmeinrichtung ein vorzugsweise in Umfangsrichtung der Klemmeinrichtung mittig angeordnetes Biegegelenk auf, von dem aus sich die Klemmeinrichtung in zwei insbesondere gleich geformte Klemmarme unterteilt. Wenn die Klemmeinrichtung geschlitzt ist, ist das Biegegelenk gegenüber von dem Schlitz ausgebildet. Mit anderen Worten kann die Klemmeinrichtung bezüglich eines in Umfangsrichtung mittig angeordneten Biegegelenks symmetrisch ausgebildet sein. In einer beispielhaften Weiterbildung ist die Klemmeinrichtung, das heißt das Biegegelenk und die zwei Klemmarme, einstückig ausgebildet. Alternativ oder zusätzlich ist in der Weiterbildung die Innenkontur der Klemmeinrichtung in Umfangsrichtung zwischen den Enden der beiden Klemmarme vorsprungsfrei und/oder vertiefungsfrei ausgebildet.

Gemäß einer beispielhaften Ausführung deformiert sich die Klemmeinrichtung beim Aufstecken auf die Stülphülse elastisch. Insbesondere kann sich die Klemmeinrichtung dadurch elastisch deformieren, dass sich die Klemmarme ausgehend von dem Biegegelenk in Umfangsrichtung auseinander biegen. Alternativ oder zusätzlich übt die Klemmeinrichtung in einer Montageendposition durch eine elastische Rückstellkraft, die durch die elastische Deformation der Klemmeinrichtung beim Aufstecken der Klemmeinrichtung auf die Stülphülse entstehen kann, eine Haltekraft und/oder Klemmkraft auf die Stülphülse auf. In einer beispielhaften Weiterbildung ist die Klemmeinrichtung in der Montageendposition undeformiert. Mit anderen Worten kann die Klemmeinrichtung in der Montageendposition wieder die Form annehmen, die sie vor dem Aufstecken auf die Stülphülse hatte. Durch die Klemmkraft und/oder Haltekraft wird die Stülphülse verstärkt. Insbesondere werden die durch den Längsschlitz getrennten Mantelabschnitte der Stülphülse verklemmt. Auf diese Weise kann ein radiales Aufweiten der Stülphülse und/oder des Dichtungskörpers begrenzt bzw. verhindert werden. Ein weiterer Vorteil der elastischen Deformation der Klemmeinrichtung ist, dass diese dadurch einfacher auf die Stülphülse aufgesteckt werden kann. Es kann auch vorgesehen sein, dass die Klemmeinrichtung die Stülphülse in der Montageendposition zusammendrückt, so dass die von dem Längsschlitz getrennten Mantelabschnitte in der Montageendposition sogar näher aneinander liegen als vor dem Aufstecken der Stülphülse auf das Kunststoffrohr.

Gemäß einer weiteren beispielhaften Ausführung sind eine Außenabmessung der Stülphülse und eine Innenabmessung der Klemmeinrichtung derart aufeinander abgestimmt, dass in der Montageendposition durch ein radiales Flächenübermaß eine Haltekraft und/oder Klemmkraft auf die Stülphülse und/oder den Dichtungskörper aufgebaut ist. Das radiale Flächenübermaß hat den Vorteil, dass die Stülphülse nicht nur an einer Stelle, sondern über den gesamten Umfang der Klemmeinrichtung verstärkt bzw. verklemmt wird, wodurch das radiale Aufweiten der Stülphülse über den gesamten Umfang der Stülphülse zuverlässig begrenzt bzw. verhindert werden kann.

In einer weiteren beispielhaften Ausführung weist die Stülphülse an einer Außenseite eine an die Klemmeinrichtung formangepasste, vorzugsweise wenigstens abschnittsweise umlaufende, Aufnahmenut für die Klemmeinrichtung auf. Es kann vorgesehen sein, dass die Aufnahmenut in Axialrichtung die gleiche Breite oder eine nur geringfügig größere Breite aufweist als die Klemmeinrichtung. Auf diese Weise kann die Klemmeinrichtung zuverlässig an einer vorbestimmten Stelle auf die Stülphülse aufgesteckt werden. Außerdem stellt die Aufnahmenut sicher, dass die Klemmeinrichtung zuverlässig in der gewünschten Endposition bleibt und sich nicht axial verschieben oder verdrehen kann. Die Tiefe der Aufnahmenut kann einer Wandstärke der Klemmeinrichtung entsprechen, so dass die Klemmeinrichtung in der Montageendposition vollständig in der Aufnahmenut aufgenommen ist. Somit vergrößert sich der Außendurchmesser der Einzelrohrabdichtung im Vergleich zu einer Einzelrohrabdichtung ohne Klemmeinrichtung nicht, so dass kein größerer Bauraum benötigt wird als für aus dem Stand der Technik bekannte Einzelrohrabdichtungen.

Gemäß einer beispielhaften Ausführung ist die Aufnahmenut im Bereich des Dichtungskörpers angeordnet. Auf diese Weise lässt sich das radiale Aufweiten der Stülphülse und/oder des Dichtungskörpers gezielt in dem Bereich begrenzen bzw. verhindern, in dem die radiale Aufweitung der Stülphülse besonders hoch ist und in dem die radiale Aufweitung des Dichtungskörpers auftritt. In einer beispielhaften Weiterbildung erstreckt sich die Aufnahmenut axial von dem Anschlag in Richtung der Einstecköffnung der Stülphülse. Mit anderen Worten beginnt die Aufnahmenut an der Außenseite der Stülphülse genau an der Stelle, an der innerhalb der Stülphülse der Dichtungskörper an dem Anschlag anliegt.

Gemäß einer weiteren beispielhaften Ausführung ist eine axiale Erstreckung der Aufnahmenut und/oder der Klemmeinrichtung größer als eine axiale Erstreckung eines zwischen dem Endabschnitt und dem Anschlag verpressten zylindrischen Grundkörpers des Dichtungskörpers. Der zylindrische Grundkörper des Dichtungskörpers kann einstückig mit dem Stirnabschnitt zum Abdichten des Kunststoffrohrs ausgebildet sein. Eine Außenabmessung des zylindrischen Grundkörpers kann an die Innenkontur der Stülphülse angepasst sein, so dass der Dichtungskörper in der Stülphülse zentriert ist und innerhalb der Stülphülse nicht verkippen kann. Wenn die Aufnahmenut und/oder die Klemmeinrichtung eine größere axiale Erstreckung hat als der zylindrische Grundkörper, kann sichergestellt werden, dass der gesamte Dichtungskörper bzw. der gesamte Bereich der Stülphülse an dem der Dichtungskörper innenseitig anliegt, verstärkt bzw. verklemmt ist.

In einer weiteren beispielhaften Ausführung ist die Klemmeinrichtung entlang einer linearen Montagerichtung radial auf die Stülphülse aufsteckbar. Insbesondere kann die Klemmeinrichtung von der Seite des Längsschlitzes aus auf die Stülphülse aufsteckbar sein, um die durch den Längsschlitz geteilten Mantelabschnitte besonders zuverlässig zu verklemmen. In dieser Ausführung kann das Biegegelenk der Klemmeinrichtung in der Montageendposition in Umfangsrichtung mittig über dem Längsschlitz der Stülphülse angeordnet sein. Alternativ oder zusätzlich ist die Klemmeinrichtung in einer Montageendposition form- und/oder kraftschlüssig an der Stülphülse, insbesondere in der Aufnahmenut, fixiert. Vorzugsweise ist die Klemmeinrichtung in der Montageendposition in radialer und/oder axialer Richtung fixiert. Besonders bevorzugt ist die Klemmeinrichtung in radialer und axialer Richtung form- und/oder kraftschlüssig fixiert, so dass eine Relativbewegung zwischen Klemmeinrichtung und Stülphülse in der Montageendposition in keiner Richtung möglich ist.

Gemäß einer beispielhaften Ausführung hintergreift die Klemmeinrichtung die Stülphülse in der Montageendposition. Beispielsweise kann die Klemmeinrichtung die Stülphülse dadurch hintergreifen, dass sich die Klemmeinrichtung beim Aufstecken auf die Stülphülse elastisch deformiert, in der Montageendposition durch die elastische Deformationsrückstellkraft aber undeformiert ist. In einer beispielhaften Weiterbildung ist an beiden Enden der Klemmarme der Klemmeinrichtung ein Rastelement ausgebildet. Das Rastelement kann insbesondere hakenförmig ausgebildet sein. In der Weiterbildung sind an der Stülphülse, insbesondere in der Aufnahmenut, zwei daran formangepasste Verrastungselemente ausgebildet. Vorzugsweise können die Verrastungselemente als Verrastungsvorsprünge realisiert sein, die radial über die Außenseite der Stülphülse oder eine Grundfläche der Aufnahmenut hervorstehen. Die Verrastungsvorsprünge können die elastische Deformation der Klemmeinrichtung verstärken, insbesondere ein Auseinanderbiegen der beiden Klemmarme verstärken. Die Verrastungsvorsprünge können entlang der Montagerichtung der Klemmeinrichtung rampenförmig ausgebildet sein, so dass die Klemmeinrichtung beim Aufstecken kontinuierlich elastisch deformiert wird bzw. die Klemmarme kontinuierlich auseinander gebogen werden. Nachdem die Enden der Klemmarme unter Überwindung eines bestimmten Widerstands in Montagerichtung über die Verrastungselemente geschoben wurden, kann die Klemmeinrichtung wieder ihre ursprüngliche Form annehmen, so dass die Rastelemente die Verrastungselemente hintergreifen. Zur Demontage der Klemmeinrichtung können die Klemmarme, insbesondere manuell ohne ein zusätzliches Werkzeug, auseinander gebogen werden, so dass die Klemmeinrichtung entgegen der Montagerichtung über die Verrastungselemente geschoben werden kann. Gemäß einer beispielhaften Weiterbildung ist die Außenkontur der Stülphülse, insbesondere die Aufnahmenut, in Umfangrichtung zwischen den Verrastungselementen vorsprungsfrei und/oder vertiefungsfrei ausgebildet. Wenn auch die Innenkontur der Klemmeinrichtung zwischen den Rastelementen an den Enden der Klemmarme vorsprungsfrei und/oder vertiefungsfrei ausgebildet ist, liegt die Klemmeinrichtung flächig an der Stülphülse an, wodurch eine besonders gleichmäßige und zuverlässige Verklemmung der Stülphülse gewährleistet ist.

In einer beispielhaften Ausführung weist die Stülphülse ein im Bereich der Aufnahmenut angeordnetes, gegenüber dem Längsschlitz in Umfangsrichtung breiteres Einsetzfenster zum radialen Einsetzen des Dichtungskörpers in die Stülphülse auf. Durch das Einsetzfenster kann der Dichtungskörper besonders einfach in die Stülphülse eingesetzt werden. Die Breite des Einsetzfensters kann einem maximalem Außendurchmesser des Dichtungskörpers und/oder der Innenabmessung der Stülphülse entsprechen, so dass beim Einsetzen des Dichtungskörpers kein zusätzlicher Widerstand überwunden werden muss und der Dichtungskörper nicht beschädigt wird.

In einer beispielhaften Weiterbildung weist der Dichtungskörper einen in Umfangsrichtung in dem Einsetzfenster angeordneten, über die Außenabmessung der Stülphülse radial vorstehenden Erweiterungsabschnitt auf. Die Breite des Erweiterungsabschnitts kann dem Außendurchmesser des zylindrischen Grundkörpers des Dichtungskörpers und somit der Breite des Einsetzfensters entsprechen. Alternativ oder zusätzlich kann das über die Außenabmessung der Stülphülse hervorstehende Ende des Erweiterungsabschnitts abgerundet sein, insbesondere kann die Rundung den gleichen Radius aufweisen wie die Außenseite des zylindrischen Grundkörpers. Insgesamt kann der Dichtungskörper im Bereich des Erweiterungsabschnitts somit oval geformt sein. In Axialrichtung kann die Höhe des Erweiterungsabschnitts der Höhe des zylindrischen Grundkörpers entsprechen. In einer beispielhaften Weiterbildung verpresst die Klemmeinrichtung den Erweiterungsabschnitt in der Montageendposition radial, wodurch der Dichtungskörper durch das zusätzliche Material stärker im Inneren der Stülphülse verpresst ist. Gleichzeitig ist die Stülphülse durch die Klemmeinrichtung verstärkt bzw. verklemmt, so dass die stärkere Verpressung des Dichtungskörpers nur zu einer höheren Dichtigkeit der Einzelrohrabdichtung aber nicht zu einem stärkeren radialen Aufweiten des Dichtungskörpers und/oder der Stülphülse führt.

In einer weiteren beispielhaften Ausführung ist eine dem Dichtungskörper zugewandte Innenfläche der Klemmeinrichtung teilweise eben ausgebildet. Der ebene Bereich der Innenkontur kann sich ausgehend von der Biegestelle symmetrisch an beiden Klemmarmen in Umfangsrichtung gleich weit erstrecken. Insbesondere kann die Innenfläche über die gesamte Breite des Einsetzfensters eben ausgebildet sein. Alternativ oder zusätzlich kann eine der Klemmeinrichtung zugewandte Fläche des Dichtungskörpers, insbesondere des Erweiterungsabschnitts, eine Radialerweiterung aufweisen. Die Radialerweiterung kann insbesondere in Umfangrichtung mittig angeordnet sein. Auf diese Weise wird der Dichtungskörper beim Aufstecken der Klemmeinrichtung stärker verpresst, weil mehr Material des Dichtungskörpers aus dem Einsetzfenster hervorsteht und/oder die Klemmeinrichtung den Dichtungskörper in der Montageendposition weiter ins Innere der Stülphülse drückt.

In einer weiteren beispielhaften Ausführung erstreckt sich das Einsetzfenster axial von dem Anschlag aus weiter in Richtung der Einstecköffnung als die Aufnahmenut. Alternativ oder zusätzlich überdeckt die Klemmeinrichtung das Einsetzfenster in der Montageendposition zu wenigstens 50%, wenigstens 60%, wenigstens 70% oder wenigstens 80%. Durch die größere Abmessung des Einsetzfensters ist sichergestellt, dass der Dichtungskörper einfach in die Stülphülse eingesetzt werden kann. Es kann vorgesehen sein, dass eine Axialerstreckung des Einsetzfensters größer ist als eine Axialerstreckung des gesamten Dichtungskörpers, mit anderen Worten eine Axialerstreckung des zylindrischen Grundkörpers und des Stirnabschnitts des Dichtungskörpers zusammen.

Gemäß einer weiteren beispielhaften Ausführung beträgt eine Axialerstreckung der Klemmeinrichtung zwischen 3 mm und 15 mm. Alternativ oder zusätzlich beträgt eine Wandstärke der Klemmeinrichtung zwischen 0, 5 mm und 2 mm. Es kann vorgesehen sein, dass die gesamte Klemmeinrichtung, auch die hakenförmigen Befestigungselemente an den Enden der Klemmarme, eine konstante Wandstärke aufweist. Auf diese Weise kann die Klemmeinrichtung besonders einfach und kostengünstig gefertigt werden.

In einer beispielhaften Ausführung ist die Klemmeinrichtung aus Kunststoff hergestellt. Insbesondere kann die Klemmeinrichtung aus thermoplastischem Kunststoff, wie PPO, PPE oder PC hergestellt sein. Dadurch lässt sich sicherstellen, dass die Klemmeinrichtung elastisch deformierbar ist und gleichzeitig eine ausreichend hohe Haltekraft und/oder Klemmkraft auf die Stülphülse ausüben kann.

In einer weiteren beispielhaften Ausführung ist die Einzelrohrabdichtung dazu ausgebildet, eine Dichtigkeit zwischen Dichtungskörper und Kunststoffrohr und/oder zwischen Dichtungskörper und Datenkabel gegenüber einem Innendruck von bis zu 0,5 bar innerhalb des Kunststoffrohrs bereitzustellen.

Gemäß einem weiteren Aspekt der vorliegenden Erfindung, der mit dem vorgehenden Aspekt und den beispielhaften Ausführungen kombinierbar ist, ist ein Kunststoffrohr, wie Mikrorohr, bereitgestellt, das einen Innenkanal zum Aufnehmen von wenigstens einem Datenkabel, wie einem Glasfaserkabel, aufweist. Das Kunststoffrohr umfasst eine erfindungsgemäße Einzelrohrabdichtung, die an einem Endabschnitt des Kunststoffrohres montiert ist, wobei insbesondere die Einzelrohrabdichtung auf dem Endabschnitt in Axialrichtung aufschiebbar ist. Die Montageposition der Einzelrohrabdichtung wird dann erreicht, wenn der elastische Dichtungskörper der Einzelrohrabdichtung in Axialrichtung verpresst ist, um umlaufende Dichtungsflächen zwischen dem Dichtungskörper und dem Kunststoffrohr und/oder zwischen dem Dichtungskörper und dem Datenkabel zu realisieren.

Bevorzugte Ausführungen sind in den Unteransprüchen angegeben.

Weitere Vorteile, Eigenschaften und Merkmale der Erfindung werden durch die folgende Beschreibung bevorzugter Ausführungen der Erfindung anhand der beiliegenden Zeichnungen deutlich, in denen zeigen:
- Fig. 1: eine perspektivische Ansicht einer beispielhaften Ausführung einer erfindungsgemäßen Einzelrohrabdichtung;
- Fig. 2: eine perspektivische Ansicht der Einzelrohrabdichtung aus Fig. 1 vor dem Einsetzen des Dichtungskörpers und vor dem Aufstecken der Klemmeinrichtung;
- Fig. 3: die Einzelrohrabdichtung aus Fig. 2 mit eingesetztem Dichtungskörper;
- Fig. 4, 5: die Einzelrohrabdichtung aus Fig. 3 mit aufgesteckter Klemmeinrichtung;
- Fig. 6: eine Schnittansicht einer beispielhaften Ausführung einer erfindungsgemäßen Stülphülse;
- Fig. 7: eine perspektivische Ansicht einer beispielhaften Ausführung einer erfindungsgemäßen Klemmeinrichtung;
- Fig. 8: eine perspektivische Ansicht einer weiteren beispielhaften Ausführung einer erfindungsgemäßen Klemmeinrichtung;
- Fig. 9: eine perspektivische Ansicht einer beispielhaften Ausführung eines erfindungsgemäßen Dichtungskörpers; und
- Fig. 10: eine perspektivische Ansicht einer weiteren beispielhaften Ausführung eines erfindungsgemäßen Dichtungskörpers.

In der folgenden Beschreibung beispielhafter Ausführungen der vorliegenden Erfindung ist eine erfindungsgemäße Einzelrohrabdichtung zum Montieren an einem Endabschnitt eines Kunststoffrohrs im Allgemeinen mit der Bezugsziffer 1 versehen.

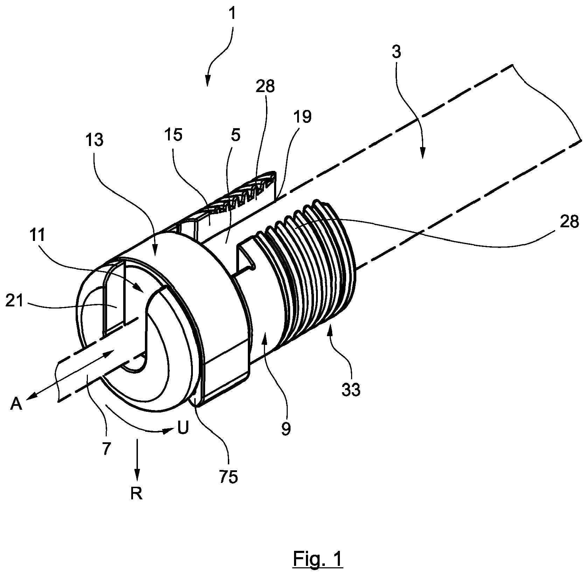

Figur 1 zeigt eine beispielhafte Ausführung einer erfindungsgemäßen Einzelrohrabdichtung 1, die an einem Endabschnitt 5 eines Kunststoffrohrs 3 montiert ist. Das Kunststoffrohr 3 weist einen Innenkanal (nicht näher dargestellt) zum Aufnehmen eines Datenkabels 7 auf. Die erfindungsgemäße Einzelrohrabdichtung 1 umfasst die folgenden Hauptkomponenten: Eine hohle Stülphülse 9 aus Kunststoff; einen in die Stülphülse 9 eingesetzten, elastisch verformbaren Dichtungskörper 11; und eine Klemmeinrichtung 13 zum Begrenzen, insbesondere Verhindern, eines radialen Aufweitens der Stülphülse 9 und/oder des Dichtungskörpers 11.

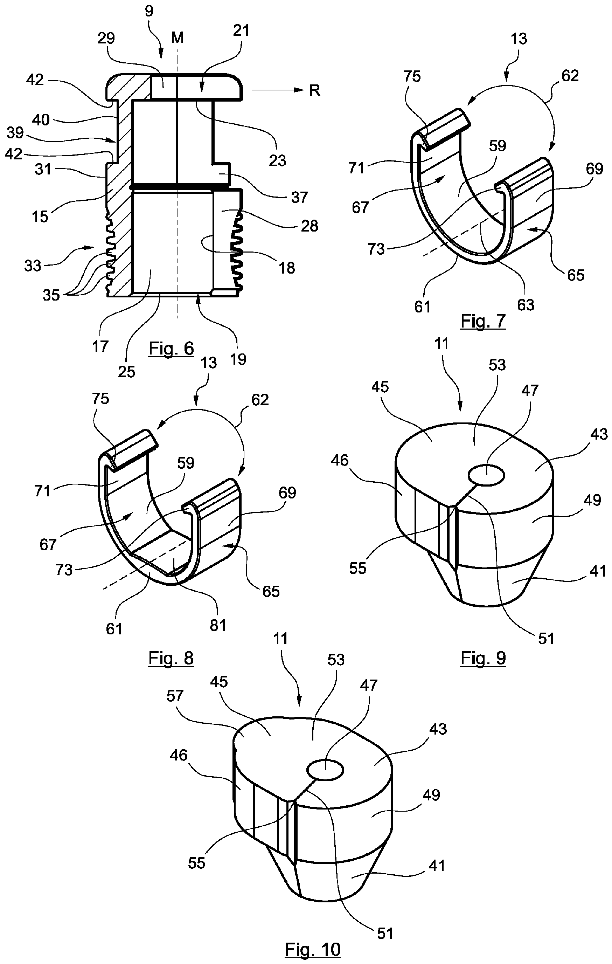

Im Folgenden werden zunächst die Struktur und die Funktionsweise der einzelnen Hauptkomponenten der Einzelrohrabdichtung 1 mit Bezug auf Figur 1 und die beispielhaften Ausführungen der einzelnen Komponenten in den Figuren 6 bis 10 im Detail erläutert.

Figur 6 zeigt eine beispielhafte Ausführung einer erfindungsgemäßen Stülphülse 9 in einer Schnittansicht. Die Stülphülse 9 ist hohlzylindrisch ausgebildet und weist einen Hülsenmantel 15 aus Kunststoff auf. Der Hülsenmantel 15 begrenzt einen zylindrischen Innenraum 17 der Stülphülse 9, in dem der Endabschnitt 5 des Kunststoffrohrs 3 aufgenommen werden kann (in Figur 1 dargestellt). Die Mittelachse M der Stülphülse 9 definiert eine Axialrichtung Ader Stülphülse 9 und der gesamten Einzelrohrabdichtung 1. Die Stülphülse 9 bzw. der Hülsenmantel 15 weist an einem axialen Ende eine Einstecköffnung 19 zum axialen Einführen des Endabschnitts 5 in die Stülphülse 9 auf. Dabei sind (wie in Figur 1 zu erkennen) die Außenabmessung des Kunststoffrohres 3 und die Innenabmessung der Stülphülse 9 aufeinander abgestimmt, so dass ein Formschluss zwischen einer Innenseite 18 der Stülphülse 9 und dem Kunststoffrohr 3 realisiert ist. Die Stülphülse 9 weist außerdem einen der Einstecköffnung 19 diametral gegenüberliegenden Anschlag 21 auf, der ein axiales Einschieben des Endabschnitts 5 begrenzt. In der Ausführung in Figur 6 ist eine an dem Dichtungskörper 11 anliegende Anschlagfläche 23 des Anschlags 21 eben ausgebildet und erstreckt sich senkrecht zur Axialrichtung A in Radialrichtung R der Stülphülse 9. Um den Endabschnitt 5 einfacher in die Stülphülse 9 einschieben zu können, ohne die Stülphülse 9 oder das Kunststoffrohr 3 zu beschädigen, ist an der Einstecköffnung 19 in Figur 6 eine umlaufende Fase 25 vorgesehen.

Die Stülphülse 9 ist zum Verlegen des in dem Kunststoffrohr 3 geführten Datenkabels 7 in den Innenraum 17 der Stülphülse 9 mit einem Längsschlitz 27 versehen, der sich in Axialrichtung A über die gesamte Stülphülse 9 erstreckt. Der Längsschlitz 27 kann in Umfangsrichtung U der Stülphülse 9 beispielsweise eine Breite von ca. 3 mm aufweisen. Der Längsschlitz 27 erstreckt sich auch durch den Anschlag 21 und verbindet eine zentrale Austrittsöffnung 29 des Anschlags 21, durch die hindurch sich das Datenkabel 7 aus der Stülphülse 9 axial erstrecken kann, mit einer Außenseite 31 der Stülphülse 9, so dass das Datenkabel 7 vollständig radial in die Stülphülse 9 eingesetzt werden kann. Der Längsschlitz 27 unterteilt den Hülsenmantel 15 in zwei gegenüberliegende Mantelabschnitte 28, von denen in der Schnittansicht in Figur 6 nur einer dargestellt ist.

Auf der Seite der Einstecköffnung 19 weist der Hülsenmantel 15 einen außenseitig konkav gekrümmten Mantelabschnitt 33 auf. Die Innenseite 18 der Stülphülse 9 weist auch in diesem Bereich einen konstanten Innendurchmesser auf, so dass sich eine in Axialrichtung A variierende Wandstärke des Hülsenmantels 15 in dem Mantelabschnitt 33 ergibt. Die Wandstärke nimmt dabei von der Einstecköffnung 19 zur Mitte des Mantelabschnitts 33 hin ab und ab der Mitte bis zur ursprünglichen Wandstärke wieder zu. Der Mantelabschnitt 33 weist an dessen Mantelaußenfläche sich im Wesentlichen radial erstreckende, in Axialrichtung A gleichmäßig verteilte, umlaufende Rippen 35 auf, um ein besseres Greifen der Stülphülse 9 zu erlauben. Die Rippen 35 sind in der Ausführung in Figur 6 ringförmig ausgebildet. Es ist jedoch auch denkbar, Rippen unterschiedlicher geometrischer Form zu verwenden. Die radiale Erstreckung der Rippen 35 ist derart an die axiale Position der jeweiligen Rippe 35 angepasst, dass der Außendurchmesser der Rippen 35 jeweils dem Außendurchmesser der Stülphülse 9 entspricht.

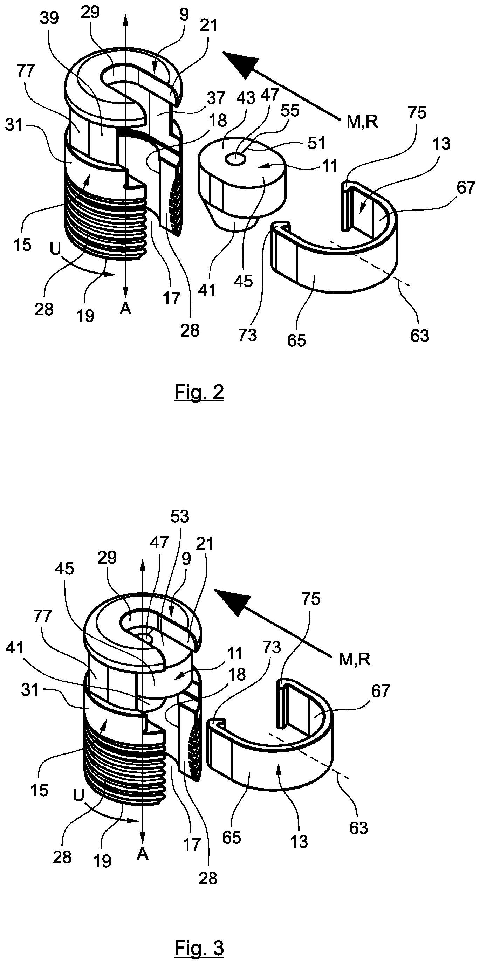

An den Anschlag 21 grenzt in der Ausführung in Figur 6 ein gegenüber dem Längsschlitz 27 in Umfangsrichtung U breiteres Einsetzfenster 37 zum radialen Einsetzen des Dichtungskörpers 11 in die Stülphülse 9 an. Die Breite des Einsetzfensters 37 ist derart bemessen, dass der Dichtungskörper 11 vollständig in den Innenraum 17 der Stülphülse 9 eingesetzt werden kann und entspricht, was insbesondere aus den Figuren 2 bis 5 hervorgeht, einem Außendurchmesser des Dichtungskörpers 11 bzw. einem Innendurchmesser der Stülphülse 9. Beispielsweise kann die Breite des Einsetzfensters 37 in Umfangsrichtung U 6 mm betragen. Der Außendurchmesser des Dichtungskörpers 11 kann aufgrund dessen elastischen Materials auch geringfügig größer ausgebildet sein als die Breite des Einsetzfensters 37. Somit ist gewährleistet, dass der Dichtungskörper 11 in dem Innenraum 17 der Stülphülse 9 aufgenommen bleibt und nach dem Einsetzen nicht wieder herausfallen kann. Axial erstreckt sich das Einsetzfenster 37 von dem Anschlag 21 aus in Richtung der Einstecköffnung 19 der Stülphülse 9. Die axiale Länge des Einsetzfensters 37 ist ebenfalls derart bemessen, dass der Dichtungskörper 11 vollständig in den Innenraum 17 der Stülphülse 9 eingesetzt werden kann, ohne den Dichtungskörper 11 oder die Stülphülse 9 zu beschädigen.

Ebenfalls an den Anschlag 21 angrenzend weist die Stülphülse 9 an der Außenseite 31 eine an die Klemmeinrichtung 13 formangepasste Aufnahmenut 39 für die Klemmeinrichtung 13 auf. Die Aufnahmenut 39 erstreckt sich wie das Einsetzfenster 37 von dem Anschlag 21 aus axial in Richtung der Einstecköffnung 19 der Stülphülse 9. In der Ausführung in Figur 6 ist die Aufnahmenut 39 umlaufend ausgebildet. Die Aufnahmenut 39 weist eine Grundfläche 40 und die Aufnahmenut 39 axial begrenzende Seitenwände 42 auf. Aus Figur 6 wird deutlich, dass sich das Einsetzfenster 37 in Axialrichtung A von dem Anschlag 21 aus weiter in Richtung der Einstecköffnung 19 erstreckt als die Aufnahmenut 39.

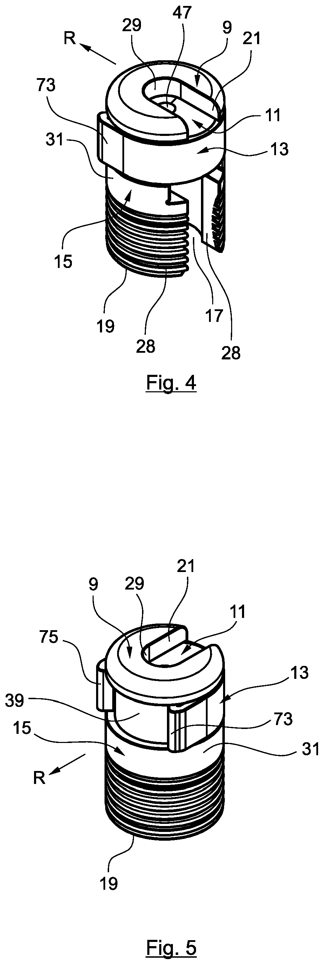

In der Aufnahmenut 39 sind zwei Verrastungsvorsprünge 77, 79 ausgebildet, von denen einer in den Figuren 2 und 3 zu erkennen ist. Die Verrastungsvorsprünge 77, 79 stehen radial über die Grundfläche 40 der Aufnahmenut 39 hervor. In Figur 2 und Figur 3 ist außerdem zu erkennen, dass die Verrastungselemente 77, 79 in Montagerichtung M der Klemmeinrichtung 13 rampenförmig ausgebildet sind. Die Verrastungselemente 77, 79 sind an Rastelemente 73, 75 an der Klemmeinrichtung 13, die später noch im Detail beschrieben werden, formangepasst. Zwischen den Verrastungselementen 77, 79 ist die Aufnahmenut 39 vorprungs- und vertiefungsfrei ausgebildet, was insbesondere in Figur 5 zu erkennen ist.

Figur 9 zeigt eine beispielhafte Ausführung eines erfindungsgemäßen Dichtungskörpers 11 in einer perspektivischen Ansicht. Der Dichtungskörper 11 umfasst einen Stirnabschnitt 41, der, wenn die Einzelrohrabdichtung 1 an dem Endabschnitt 5 montiert ist, dem Innenkanal des Kunststoffrohrs 3 zugewandt ist und zum Abdichten des Kunststoffrohrs 3 und/oder des Datenkabels 7 dient. In der Ausführung in Figur 9 ist der Stirnabschnitt 41 kegelstumpfförmig geformt. An den Stirnabschnitt 41 schließt sich ein zylindrischer Grundkörper 43 des Dichtungskörpers 11 an. Der kegelstumpfförmige Stirnabschnitt 41 verjüngt sich ausgehend von dem Grundkörper 43 in Axialrichtung A kontinuierlich. Durch den in Axialrichtung A abnehmenden Durchmesser des Stirnabschnitts 41 ist stets ein vollumfänglicher Dichtungskontakt innerhalb des Innenkanals des Kunststoffrohrs 3 bereitgestellt, wenn der Stirnabschnitt 41 nach der Montage der Einzelrohrabdichtung 1 an dem Endabschnitt 5 in dem Innenkanal des Kunststoffrohrs 3 aufgenommen ist.

Wenn die Einzelrohrabdichtung 1 an dem Endabschnitt 5 montiert ist, wird der Grundkörper 43 axial zwischen dem Anschlag 21 der Stülphülse 9 und dem Endabschnitt 5 verpresst, um den Innenkanal des Kunststoffrohrs 3 und/oder das Datenkabel 7 abzudichten. Der zylindrische Grundkörper 43 weist einen Erweiterungsabschnitt 45 auf, der an einer Seite radial über die Außenabmessung des zylindrischen Grundkörpers 43 hervorsteht. Die Breite des Erweiterungsabschnitts 45 entspricht dem Außendurchmesser des Grundkörpers 43. Eine Außenseite 46 des Erweiterungsabschnitts ist gekrümmt ausgebildet und weist den gleichen Radius auf wie der Grundkörper 43. Insgesamt ist der Dichtungskörper 11 in der Ausführung in Figur 9 somit oval geformt. In Axialrichtung A weisen der Grundkörper 43 und der Erweiterungsabschnitt 45 die gleiche Höhe auf. In Radialrichtung R ist der Erweiterungsabschnitt 45 derart bemessen, dass er, wenn der Dichtungskörper 11 in die Stülphülse 9 eingesetzt ist, in dem Einsetzfensters 37 radial über die Außenabmessung der Stülphülse 9 hervorsteht. In der Montageendposition der Klemmeinrichtung 13 ist somit die Fläche 46 der Klemmeinrichtung 13 zugewandt und steht mit dieser in Kontakt.

Der Dichtungskörper 11 weist über seine gesamte Axialerstreckung eine zentrale Durchgangsbohrung 47 zum Aufnehmen des Datenkabels 7 auf. Ausgehend von der Durchgangsbohrung 47 weist der Dichtungskörper 11 einen sich bis zu einer Außenseite 49 des Dichtungskörpers 11 erstreckenden Dichtungsschlitz 51 auf über den das Datenkabel 7 in die Durchgangsbohrung 47 radial eingesetzt werden kann. Am äußeren Ende weist der Dichtungsschlitz 51 eine V-förmige Aufweitung 55 auf, die das Einsetzen des Datenkabels 7 erleichtert und Beschädigungen an dem Datenkabel 7 und dem Dichtungskörper 11 beim Einsetzen verhindert. Eine dem Stirnabschnitt 41 gegenüberliegende Anschlagfläche 53 des Dichtungskörpers 11 ist wie die Anschlagfläche 23 an der Stülphülse 9 eben ausgebildet, so dass ein vollflächiger Kontakt zwischen dem Dichtungskörper 11 und der Stülphülse 9 entsteht. Bevorzugt ist der gesamte Dichtungskörper 11 einstückig ausgebildet und kann beispielsweise in einem Spritzgussverfahren hergestellt werden.

Die weitere beispielhafte Ausführung eines erfindungsgemäßen Dichtungskörpers 11 in Figur 10 unterscheidet sich dadurch von der Ausführung in Figur 9, dass der Erweiterungsabschnitt 45 eine in Umfangsrichtung U mittig an der Außenseite 46 des Erweiterungsabschnitts 45 angeordnete Radialerweiterung 57 aufweist. Durch die Radialerweiterung 57 ragt mehr Material des Dichtungskörpers 11 radial über die Außenseite 31 der Stülphülse 9 hervor, so dass der Dichtungskörper 11 stärker verpresst wird. Dadurch erhöht sich die Dichtigkeit der Einzelrohrabdichtung 1, was später in Bezug auf die Figuren 2 bis 5 noch erläutert wird.

Figur 7 zeigt eine beispielhafte Ausführung einer erfindungsgemäßen Klemmeinrichtung 13 in einer perspektivischen Ansicht. Die Klemmeinrichtung 13 ist in dieser Ausführung aus Kunststoff gefertigt und rotationsförmig ausgebildet. Die Klemmeinrichtung 13 weist eine rotationsförmige Innenkontur 59 und eine ebenfalls rotationsförmige Außenkontur 61 auf. Die Innenkontur 59 ist an die Außenkontur 31 der Stülphülse 9 bzw. an die Grundfläche 40 der Aufnahmenut 39 formangepasst. Die Klemmeinrichtung 13 ist geschlitzt ausgebildet, wobei ein Öffnungswinkel, der in Figur 7 mit dem Bezugszeichen 62 angedeutet ist, weniger als 180°, insbesondere zwischen 90° und 180° beträgt. In der Montageendposition umgreift die Klemmeinrichtung 13 die Stülphülse 9 somit um wenigstens 50%, insbesondere um wenigstens 60 %.

In Radialrichtung R gegenüber der Öffnung befindet sich ein Biegegelenk, das mit dem Bezugszeichen 63 angedeutet ist. Mit anderen Worten ist das Biegelenk 63 in Umfangsrichtung U der Klemmeinrichtung 13 betrachtet mittig angeordnet. Ausgehend von dem Biegegelenk 63 unterteilt sich die Klemmeinrichtung 13 in zwei Klemmarme 65, 67, die in der Ausführung in Figur 7 gleich geformt sind. An den Enden 69, 71 der Klemmarme 65, 67 weist die Klemmeinrichtung 13 jeweils ein hakenförmiges Rastelement 73, 75 auf. Zwischen den Rastelementen 73, 75 ist die Innenkontur 59 der Klemmeinrichtung 13 vorprungs- und vertiefungsfrei ausgebildet, so dass die Klemmeinrichtung 13 in der Montageendposition (in Figur 4 und 5 dargestellt) flächig an der Grundfläche 40 der Aufnahmenut 39 anliegt.

Eine axiale Erstreckung der Klemmeinrichtung 13 kann zwischen 3 mm und 15 mm liegen. Aus Figur 2 wird deutlich, dass die Aufnahmenut 39 an der Stülphülse 9 und die Klemmeinrichtung 13 die gleiche Axialerstreckung aufweisen, die größer ist als die Axialerstreckung des Grundkörpers 43 des Dichtungskörpers 11. Dadurch überdeckt die Klemmeinrichtung 13 den Grundkörper 43 des Dichtungskörper 11 in der Montageendposition vollständig (in Figur 4 dargestellt), so dass ein radiales Aufweiten der Stülphülse 9 und/oder des Dichtungskörpers 11 besonders zuverlässig verhindert bzw. begrenzt werden kann. Eine Wandstärke der Klemmeinrichtung 13 kann zwischen 0,5 mm und 2 mm betragen.

Die weitere beispielhafte Ausführung einer erfindungsgemäßen Klemmeinrichtung 13 in Figur 8 unterscheidet sich von der Ausführung in Figur 7 dadurch, dass die Innenkontur 59 der Klemmeinrichtung 13 an der Biegestelle 63 eben geformt ist. Eine ebene Innenfläche 81 erstreckt sich von der Biegestelle 63 aus in Umfangsrichtung U gleich weit an beiden Klemmarmen 65, 67. Eine Breite der Innenfläche 81 entspricht der Breite des Einsetzfensters 37 der Stülphülse 9. Die ebene Innenfläche 81 ist in der Montageendposition der Klemmeinrichtung 13 dem Dichtungskörper 11 zugewandt und drückt diesen weiter ins Innere der Stülphülse 9, so dass der Dichtungskörper 11 stärker verpresst wird. Das führt, wie die Radialerweiterung 57 an dem Dichtungskörper 11, zu einer höheren Dichtheit der Einzelrohrabdichtung 1.

Die Montage einer erfindungsgemäßen Einzelrohrabdichtung 1 und der einzelnen Komponenten der Einzelrohrabdichtung 1 wird im Folgenden anhand der Figuren 2 bis 5 im Detail erläutert. In Figur 2 ist sind die Stülphülse 9, der Dichtungskörper 11 und die Klemmeinrichtung 13 separat voneinander in einem unmontierten Zustand dargestellt.

In einem ersten Schritt wird der Dichtungskörper 11 über das Einsetzfenster 37 radial in die Stülphülse 9 eingesetzt. Figur 3 zeigt die Stülphülse 9 mit eingesetztem Dichtungskörper 11. Die Anschlagfläche 53 des Dichtungskörpers 11 liegt dabei an der Anschlagfläche 23 der Stülphülse 9 flächig an. Der Erweiterungsabschnitt 45 des Dichtungskörpers 11 steht in dem Einsetzfenster 37 radial über die Außenseite 31 der Stülphülse 9 hervor.

In einem zweiten Schritt wird die Klemmeinrichtung 13 radial entlang der Montagerichtung M von der Seite des Längsschlitzes 27 aus auf die Stülphülse 9 aufgesteckt. In der Ausführung in den Figuren 2 bis 5 entspricht die Montagerichtung M der Einsetzrichtung des Dichtungskörpers 11. Beim Aufstecken deformiert sich die Klemmeinrichtung 13 elastisch. Dabei biegen sich die Klemmarme 65, 67 ausgehend von dem Biegegelenk 63 kontinuierlich weiter auseinander, wenn die Klemmeinrichtung 13 über die rampenförmigen Verrastungselemente 77, 79 in der Aufnahmenut 39 geschoben wird. In der Montageendposition (in Figur 4 und 5 dargestellt) ist die Klemmeinrichtung 13 undeformiert und weist aufgrund einer elastischen Deformationsrückstellkraft wieder ihre ursprüngliche Form wie vor dem Aufstecken auf die Stülphülse 9 auf. In der Montageendposition hintergreifen die Rastelemente 73, 75 der Klemmeinrichtung 13 die Verrastungselemente 77, 79 in der Aufnahmenut 39. Dadurch ist die Klemmeinrichtung 13 in der Montageendposition kraft- und formschlüssig an der Stülphülse 9 fixiert. Um die Klemmeinrichtung 13 wieder zu demontieren, können die Rastelemente 73, 75 an der Klemmeinrichtung 13 manuell auseinander gebogen werden, so dass diese entgegen der Montagerichtung M über die Verrastungselemente 77, 79 geschoben werden können.

Durch die elastische Deformationsrückstellkraft übt die Klemmeinrichtung 13 außerdem eine Haltekraft und/oder Klemmkraft auf die Stülphülse 9 aus. Die Klemmeinrichtung 13 verhindert somit in der Montageendposition ein radiales Aufweiten der Stülphülse 9 und/oder des Dichtungskörpers 11 durch die axiale Verpressung des Dichtungskörpers 11 zwischen dem Anschlag 21 und dem Endabschnitt 5, indem sie die durch den Längsschlitz 27 der Stülphülse 9 geteilten Mantelabschnitte 28 verklemmt und so verhindert, dass diese sich aufbiegen. Zusätzlich verpresst die Klemmeinrichtung 13 den aus dem Einsetzfenster 37 hervorstehenden Erweiterungsabschnitt 45 des Dichtungskörpers 11 in Radialrichtung R, so dass dieser stärker im Inneren der Stülphülse 9 verpresst ist, was eine zuverlässigere und höhere Dichtigkeit der Einzelrohrabdichtung 1 gewährleistet. Die Radialerweiterung 57 an dem Erweiterungsabschnitt 45 (Figur 10) und/oder der ebene Abschnitt 81 der Innenkontur 59 der Klemmeinrichtung 13 (Figur 8) können diesen Effekt weiter verstärken.

In der Ausführung in den Figuren 2 bis 5 ist die Klemmeinrichtung 13 in der Montageendposition form- und kraftschlüssig an der Stülphülse 9 fixiert. Dabei verhindert die Aufnahmenut 39 ein axiales Verschieben der Klemmeinrichtung 13 in Bezug auf die Stülphülse 9. Die Aufnahmenut 39 verhindert außerdem, dass die Klemmeinrichtung 13 verkippt. In radialer Richtung ist die Klemmeinrichtung 13 dadurch fixiert, dass die Rastelemente 73, 75 die Verrastungselemente 77, 79 hintergreifen, und somit ein Drehen der Klemmeinrichtung 13 in Bezug auf die Stülphülse 9 verhindern. In der Montageendposition ist somit eine Relativbewegung zwischen der Klemmeinrichtung 13 und der Stülphülse 9 in keiner Richtung möglich.

In der Ausführung der Figuren 2 bis 5 ist die Tiefe der Aufnahmenut 39 derart an die Wandstärke der Klemmeinrichtung 13 angepasst, dass die Klemmeinrichtung 13 in der Montageendposition vollständig in der Aufnahmenut 39 aufgenommen ist und die Außenkontur 61 der Klemmeinrichtung 13 radial nicht über die Außenkontur 31 der Stülphülse 9 hervorsteht.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Einzelrohrabdichtung
- 3: Kunststoffrohr
- 5: Endabschnitt
- 7: Datenkabel
- 9: Stülphülse
- 11: Dichtungskörper
- 13: Klemmeinrichtung
- 15: Hülsenmantel
- 17: Innenraum
- 18: Stülphülseninnenseite
- 19: Einstecköffnung
- 21: Anschlag
- 23: Anschlagfläche
- 25: Fase
- 27: Längsschlitz
- 28: Mantelabschnitt
- 29: Austrittsöffnung
- 31: Stülphülsenaußenseite
- 33: Mantelabschnitt
- 35: Rippen
- 37: Einsetzfenster
- 39: Aufnahmenut
- 40: Grundfläche
- 41: Stirnabschnitt
- 42: Seitenfläche
- 43: zylindrischer Grundkörper
- 45: Erweiterungsabschnitt
- 46: Außenseite
- 47: Durchgangsbohrung
- 49: Dichtungskörperaußenseite
- 51: Dichtungsschlitz
- 53: Anschlagfläche
- 55: Aufweitung
- 57: Radialerweiterung
- 59: Innenkontur
- 61: Außenkontur
- 62: Öffnungswinkel
- 63: Biegegelenk
- 65, 67: Klemmarme
- 69, 71: Klemmarmende
- 73,75: Rastelement
- 77,79: Verrastungselement
- 81: Innenfläche

- M: Mittelachse
- A: Axialrichtung
- R: Radialrichtung
- M: Montagerichtung

## Patentansprüche

1. Einzelrohrabdichtung (1) zum Montieren an einem Endabschnitt (5) eines starren Kunststoffrohrs (3), wie eines Mikrorohrs, das einen Innenkanal zum Aufnehmen von wenigstens einem Datenkabel (7), wie einem Glasfaserkabel, aufweist, umfassend:
eine hohle Stülphülse (9) aus Kunststoff, die eine Einstecköffnung (19) zum axialen Einführen des Endabschnitts (5), einen der Einstecköffnung (19) diametral gegenüberliegenden Anschlag (21), der ein axiales Verschieben des eingesteckten Endabschnitts (5) begrenzt, und eine Austrittsöffnung (29) aufweist, durch die hindurch sich das Datenkabel (7) aus der Stülphülse (9) axial erstrecken kann, wobei die Stülphülse (9) mit einem Längsschlitz (27) versehen ist, längs dem das Datenkabel (7) radial in die Stülphülse (9) einsetzbar ist; und
einen in die Stülphülse (9) eingesetzten, elastisch verformbaren Dichtungskörper (11), der einen dem Innenkanal zugewandten Stirnabschnitt (41) aufweist, der zum Abdichten des Innenkanals geformt ist, wobei zum Aufbau der Abdichtung der Dichtungskörper (11) zwischen dem Anschlag (21) und dem Endabschnitt (5) axial verpresst ist;
**gekennzeichnet durch** eine Klemmeinrichtung (13), die zum Begrenzen, insbesondere Verhindern, eines radialen Aufweitens der Stülphülse (9) und/oder des Dichtungskörpers (11) infolge dessen axialer Verpressung zwischen dem Anschlag (21) und dem Endabschnitt (5) ausgebildet ist.

2. Einzelrohrabdichtung (1) nach Anspruch 1, wobei die Klemmeinrichtung (13) separat zur Stülphülse (9) hergestellt und/oder radial auf die Stülphülse (9) aufsteckbar ist.

3. Einzelrohrabdichtung (1) nach Anspruch 1 oder 2, wobei die Klemmeinrichtung (13) wenigstens teilweise rotationsförmig, vorzugsweise als Klemmring oder Klemmhülse, ausgebildet ist und/oder eine vorzugsweise rotationsförmige Innenkontur (59) der Klemmeinrichtung (13) wenigstens abschnittsweise an eine Außenkontur (31) der Stülphülse (9) formangepasst ist.

4. Einzelrohrabdichtung (1) nach einem der vorstehenden Ansprüche, wobei die Klemmeinrichtung (13) in Umfangsrichtung (U) geschlitzt ist, wobei insbesondere ein Öffnungswinkel (62) zwischen 90° und 180° beträgt und/oder die Klemmeinrichtung (13) die Stülphülse (9) zu wenigstens 50 %, insbesondere wenigstens 60 %, umgreift.

5. Einzelrohrabdichtung (1) nach einem der vorstehenden Ansprüche, wobei die Klemmeinrichtung (13) ein vorzugsweise in Umfangsrichtung (U) mittig angeordnetes Biegegelenk (63) aufweist, von dem aus sich die Klemmeinrichtung (13) in zwei insbesondere gleich geformte Klemmarme (65, 67) unterteilt, wobei insbesondere die Klemmeinrichtung (13) einstückig ausgebildet ist und/oder die Innenkontur (59) der Klemmeinrichtung (13) in Umfangsrichtung (U) zwischen Enden (69, 71) der Klemmarme (65, 67) vorsprungsfrei und/oder vertiefungsfrei ausgebildet ist.

6. Einzelrohrabdichtung (1) nach einem der vorstehenden Ansprüche, wobei sich die Klemmeinrichtung (13) beim Aufstecken auf die Stülphülse (9) elastisch deformiert, insbesondere sich die Klemmarme (65, 67) ausgehend von dem Biegegelenk (63) auseinander biegen, und/oder die Klemmeinrichtung (13) in einer Montageendposition durch eine elastische Deformationsrückstellkraft eine Haltekraft und/oder Klemmkraft auf die Stülphülse (9) ausübt, wobei insbesondere die Klemmeinrichtung (13) in der Montageendposition undeformiert ist, insbesondere wobei eine Außenabmessung der Stülphülse (9) und eine Innenabmessung der Klemmeinrichtung (13) derart aufeinander abgestimmt sind, dass in der Montageendposition durch ein radiales Flächenübermaß eine Haltekraft und/oder Klemmkraft auf die Stülphülse (9) und/oder den Dichtungskörper (11) aufgebaut ist.

7. Einzelrohrabdichtung (1) nach einem der vorstehenden Ansprüche, wobei die Stülphülse (9) an einer Außenseite (31) eine an die Klemmeinrichtung (13) formangepasste, vorzugsweise wenigstens abschnittsweise umlaufende, Aufnahmenut (39) für die Klemmeinrichtung (13) aufweist, insbesondere wobei die Aufnahmenut (39) im Bereich des Dichtungskörpers (11) angeordnet ist, wobei insbesondere die Aufnahmenut (39) sich axial von dem Anschlag (21) in Richtung der Einstecköffnung (19) der Stülphülse (9) erstreckt, insbesondere wobei eine axiale Erstreckung der Aufnahmenut (39) und/oder der Klemmeinrichtung (13) größer ist als eine axiale Erstreckung eines zwischen dem Endabschnitt (5) und dem Anschlag (21) verpressten zylindrischen Grundkörpers (43) des Dichtungskörpers (11).

8. Einzelrohrabdichtung (1) nach einem der vorstehenden Ansprüche, wobei die Klemmeinrichtung (13) entlang einer linearen Montagerichtung (M), insbesondere von der Seite des Längsschlitzes (27) aus, radial auf die Stülphülse (9) aufsteckbar ist und/oder in einer Montageendposition form- und/oder kraftschlüssig, vorzugsweise in radialer und/oder axialer Richtung, an der Stülphülse (9), vorzugsweise in der Aufnahmenut (39), fixiert ist.

9. Einzelrohrabdichtung (1) nach einem der Ansprüche 6 bis 8, wobei die Klemmeinrichtung (13) die Stülphülse (9) in der Montageendposition hintergreift, wobei insbesondere an beiden Klemmarmen (65, 67) an einem Ende (69, 71) ein vorzugsweise hakenförmiges Rastelement (73, 75) und an der Stülphülse (9), vorzugsweise in der Aufnahmenut (39), zwei daran formangepasste Verrastungselemente (77, 79), vorzugsweise Verrastungsvorsprünge, ausgebildet sind, insbesondere wobei die Außenkontur (31) der Stülphülse (9), insbesondere die Aufnahmenut (39), in Umfangsrichtung (U) zwischen den Verrastungselementen (77, 79) vorsprungsfrei und/oder vertiefungsfrei ausgebildet ist.

10. Einzelrohrabdichtung (1) nach einem der Ansprüche 7 bis 9, wobei die Stülphülse (9) ein im Bereich der Aufnahmenut (39) angeordnetes, gegenüber dem Längsschlitz (27) in Umfangsrichtung (U) breiteres Einsetzfenster (37) zum radialen Einsetzen des Dichtungskörpers (11) in die Stülphülse (9) aufweist, insbesondere wobei der Dichtungskörper (11) einen in dem Einsetzfenster (37) angeordneten, über die Außenabmessung der Stülphülse (9) radial vorstehenden Erweiterungsabschnitt (45) aufweist, wobei insbesondere die Klemmeinrichtung (13) den Erweiterungsabschnitt (45) in der Montageendposition radial verpresst, und/oder wobei eine dem Dichtungskörper (11) zugewandte Innenfläche (81) der Klemmeinrichtung (13) teilweise eben ausgebildet ist, insbesondere über die gesamte Breite des Einsetzfensters (37) eben ausgebildet ist, und/oder eine der Klemmeinrichtung (13) zugewandte Fläche (46) des Dichtungskörpers (11), insbesondere des Erweiterungsabschnitts (45), eine Radialerweiterung (57) aufweist.

11. Einzelrohrabdichtung (1) nach Anspruch 10, wobei das Einsetzfenster (37) sich axial von dem Anschlag (21) aus weiter in Richtung der Einstecköffnung (19) erstreckt als die Aufnahmenut (39), und/oder die Klemmeinrichtung (13) in der Montageendposition das Einsetzfenster (37) zu wenigstens 50 %, insbesondere wenigstens 60 %, wenigstens 70 % oder wenigstens 80 %, überdeckt.

12. Einzelrohrabdichtung (1) nach einem der vorstehenden Ansprüche, wobei eine axiale Erstreckung der Klemmeinrichtung (13) zwischen 3 mm und 15 mm beträgt und/oder eine Wandstärke der Klemmeinrichtung (13) zwischen 0,5 mm und 2 mm beträgt.

13. Einzelrohrabdichtung (1) nach einem der vorstehenden Ansprüche, wobei die Klemmeinrichtung (13) aus Kunststoff, insbesondere aus thermoplastischem Kunststoff wie PPO, PPE oder PC, hergestellt ist.

14. Einzelrohrabdichtung (1) nach einem der vorstehenden Ansprüche, wobei die Einzelrohrabdichtung (1) dazu ausgebildet ist, eine Dichtigkeit zwischen Dichtungskörper (11) und Kunststoffrohr (3) und/oder zwischen Dichtungskörper (11) und Datenkabel (7) gegenüber einem Innendruck von bis zu 0,5 bar innerhalb des Kunststoffrohrs (3) bereitzustellen.

15. Kunststoffrohr (3), wie Mikrorohr, das einen Innenkanal zum Aufnehmen von wenigstens einem Datenkabel (7), wie einem Glasfaserkabel, aufweist, umfassend eine nach einem der vorstehenden Ansprüche ausgebildete Einzelrohrabdichtung (1), die an einem Endabschnitt (5) des Kunststoffrohrs (3) montiert ist.
